# EUROPÄISCHE PATENTSCHRIFT

(11) **EP 2 131 185 B1**
(45) Veröffentlichungstag und Bekanntmachung des Hinweises auf die Patenterteilung: **10.09.2014**
(21) Anmeldenummer: 09007345.3
(22) Anmeldetag: 03.06.2009
(51) Int. Cl.: G01N 21/88, G01B 3/26

(54) **Gerät zur visuellen Prüfung von Rissen, insbesondere in der Oberfläche von Bauteilen**
Device for visual examination of fissures, in particular in the surface of components
Appareil de vérification visuelle de fissures, notamment sur la surface de composants

(30) Priorität: 04.06.2008 DE 202008007448 U; 07.07.2008 DE 202008009129 U
(43) Veröffentlichungstag der Anmeldung: 09.12.2009
(73) Patentinhaber: Kliewe GmbH, 22459 Hamburg (DE)
(72) Erfinder: Mayer, Marek, 22844 Norderstedt (DE); Mayer, Nicole, 22844 Norderstedt (DE)
(74) Vertreter: Richter, Joachim

(56) Entgegenhaltungen:
- CH-A- 252 556
- DE-A1- 19 820 820
- DE-U1- 20 003 732
- US-A- 2 466 884
- US-A- 2 687 574

## Beschreibung

Die Erfindung betrifft ein Gerät zur visuellen Prüfung von Rissen in der Oberfläche von Bauteilen gemäß dem Oberbegriff des Anspruches 1.

Geräte, die zur Messung von geometrischen Abmessungen Messstifte verwenden, sind beispielsweise aus der Druckschrift US 2,687,574 oder aus der Druckschrift CH 252556 bekannt.

Aus der US 2,466,884 ist ein Maulschlüsselsatz bekannt, und die einzelnen Maulschlüssel können wahlweise aus einem Aufnahmekörper herausgeführt werden, jedoch ist ein derartiges System aus Werkzeugelementen und einem Aufnahmekörper zur Bildung eines Gerätes, das zur visuellen Prüfung von Rissen in der Oberfläche von Bauteilen ausgebildet ist, nicht modifizierbar.

Zur visuellen Prüfung von Rissen in der Oberfläche von Bauteilen und Werkstücken aus metallischen Materialien oder aus Kunststoffen, werden minenartige Messstifte mit den verschiedensten Durchmessern, z. B. mit Durchmessern von 0,1 mm bis 1 mm verwendet, wobei derartig vorgegangen wird, dass in dem Bereich der zu überprüfenden Risse, d. h. neben dem Riss, nacheinander mehrere Messstifte mit den verschiedenen Durchmessern gelegt werden und durch visuellen Ausgleich festgestellt wird, welcher Messstift mit einem vorgegebenen Durchmesser dem Durchmesser des Risses am Nächsten kommt bzw. dem Durchmesser des Risses entspricht. Für diese visuelle Prüfung ist es erforderlich, dass eine Anzahl von Messstiften mit den verschiedenen Durchmessern zur Verfügung steht, wobei die Messstifte für den Prüfungsvorgang einzeln an den Riss gelegt werden, was so lange mit Messstiften mit den verschiedenen Durchmessern erfolgt, bis der Durchmesser eines Messstiftes mit dem Durchmesser des Risses übereinstimmt. Ist eine visuelle Übereinstimmung erfolgt, wird über den Durchmesser des Messstiftes, dessen Durchmesser mit dem Durchmesser des Risses übereinstimmt, festgelegt, ob eine Toleranzgrenze überschritten und das Werkstück oder Bauteil Ausschuss ist oder nicht. Diese Handhabung der visuellen Überprüfung ist umständlich und zeitaufwendig, weil aus einer Vielzahl von Messstiften mit den verschiedensten Durchmessern die Messstifte mit solchen Durchmessern herausgesucht werden müssen, die mit ihren Durchmessern dem Durchmesser des zu überprüfenden Risses am Nächsten kommen. Hinzukommt, dass durch nicht fachgerechte Handhabung und durch längeren Gebrauch der Messstifte diese einer Formveränderung unterworfen sind, weil die Messstifte drahtartig ausgebildet sind und bei der Handhabung leicht verbogen werden können, wodurch sich Schwierigkeiten bei der visuellen Überprüfung durch formveränderte Messstifte ergeben, was zu Ungenauigkeiten führen kann.

Es ist daher Aufgabe der vorliegenden Erfindung, ein Gerät der eingangs beschriebenen Art für die visuelle Überprüfung von Rissen, insbesondere in der Oberfläche von Bauteilen oder Werkstücken zur Verfügung zu stellen, bei dem die Messstifte bei Nichtgebrauch geschützt in einem Gerätegehäuse untergebracht sind, wohingegen für den Gebrauch jeweils nur ein Abschnitt des Messstiftes zur Verfügung gestellt wird. Hinzu kommt, dass in einem Gerät mehrere Messstifte mit unterschiedlichen Durchmessern zusammengefasst einzeln für den Prüfvorgang zur Verfügung gestellt werden können und ihre vorgegebene Form auch bei einem zahlreichen Gebrauch beibehalten.

Gelöst wird diese Aufgabe mit einem Gerät der eingangs beschriebenen Art mit den im Kennzeichen des Anspruches 1 angegebenen Merkmalen.

Hiernach besteht die Erfindung aus einem Gerät, das aus einem flachen Gehäuse mit einem quadratischen, rechteckförmigen, kreisförmigen oder einem mehreckigen Querschnitt und mit einer Bodenplatte, einer Deckelplatte und einer umlaufenden, die Bodenplatte mit der Deckelplatte verbindenden Seitenwand besteht, wobei in dem Innenraum des Gehäuses ein oder mehrere, verschiedene Durchmesser aufweisende drahtförmige Messstifte angeordnet sind, die einzeln vermittels eines außerhalb des Gehäuses angeordneten hand- oder motorisch-betriebenen Schiebers in Messstiftlängsrichtung derart verschieblich sind, dass im ausgefahrenen Zustand der Messstift mit einem Abschnitt aus der Seitenwand des Gehäuses herausragt, wobei zum Verschieben der Messstifte jedem Messstift eine innerhalb des Gehäuses angeordnete Vorrichtung zugeordnet ist, die eine als verschiebbarer Schlitten ausgebildete Halterung für den Messstift aufweist, wobei der Schlitten mit dem außerhalb des Gehäuses angeordneten Schieber verbunden ist und wobei die Messstifte einen Durchmesser von 0,2 mm, 0,3 mm, 0,35 mm, 0,4 mm, 0,5 mm, 0,6 mm, 0,7 mm, 0,85 mm, 0,9 mm, 1,0 mm oder 1,6 mm aufweisen.

In dem Gehäuse des Gerätes mit einem quadratischen oder rechteckförmigen Querschnitt sind mehrere Messstifte nebeneinanderliegend angeordnet, wobei bei einer Ausgestaltung des Gehäuses mit einem kreisförmigen Querschnitt mehrere Messstifte radial zum Mittelpunkt des Gehäuses angeordnet sind.

Nach einer bevorzugten Ausführungsform der Erfindung sind in dem Innenraum des einen kreisförmigen Querschnitt aufweisenden Gehäuses acht radial angeordnete Messstifte mit den Durchmessern von 0,2 mm, 0,3 mm, 0,35 mm, 0,4 mm, 0,6 mm, 0,85 mm, 1,0 mm und 1,6 mm verschieblich angeordnet.

Dabei ist jeder Messstift soweit aus dem Gehäuse herausschiebbar, dass sein aus der Seitenwand des Gehäuses herausragender Abschnitt bevorzugterweise eine Länge von mindestens 10 mm aufweist.

Jeder drahtförmige Messstift besteht aus einem Metall oder einem anderen geeigneten Werkstoff oder aus einem Kunststoff.

Weitere vorteilhafte Ausgestaltungen sind Gegenstand der Unteransprüche.

So besteht das Gerät nach einer weiteren Ausführungsform aus einem flachen Gehäuse mit einem quadratischen, rechteckförmigen, kreisförmigen oder einem mehreckigen Querschnitt und mit einer Bodenplatte, einer Deckelplatte und einer umlaufenden, die Bodenplatte mit der Deckelplatte verbindenden Seitenwand, wobei in dem Innenraum des Gehäuses mindestens eine Vorrichtung angeordnet ist, die eine als verschiebbaren Schlitten ausgebildete Halterung für einen drahtförmigen Messstift, bevorzugterweise aus einem metallischen Material, mit einem vorgegebenen Durchmesser umfasst, wobei der Schlitten mit dem Messstift mit einem als Handhabe ausgebildeten und auf der Außenwandfläche der Deckelplatte des Gehäuses in Längsrichtung des Messstiftes verschieblichen, plattenförmigen Schieber verbunden ist, der mit einer lösbaren Arretierungseinrichtung auf der Außenwandfläche der Deckelplatte des Gehäuses derart zusammenwirkt, dass bei einem Verschieben des Schiebers der gleichzeitig vom Schlitten mitgenommene Messstift mit einem Abschnitt aus der Seitenwand des Gehäuses soweit aus dem Gehäuse herausgeschoben wird, dass der Messstift mit einem Abschnitt aus der Seitenwand des Gehäuses herausragt, wobei die Länge des herausgeschobenen Abschnittes des Messstiftes durch das funktionelle Zusammenwirken der Arretierungseinrichtung zwischen dem Schieber und der Deckelplatte des Gehäuses vorgegeben ist.

Die Deckelplatte des Gehäuses ist mit einem in Bewegungsrichtung des Schiebers verlaufenden Langloch zur Aufnahme des den Schlitten der Vorrichtung mit dem Schieber verbindenden Zapfens oder Schraubverbindung versehen. Der Messstift selbst ist mit seinem dem Schlitten zugekehrten Ende mit dem Schlitten fest verbunden.

In der dem Schlitten gegenüberliegenden Seitenwand des Gehäuses ist eine Durchbohrung für das Hindurchführen des Messstiftes vorgesehen, wenn dieser aus dem Gehäuse herausgeschoben wird.

Die das Gerät enthaltende Arretierungseinrichtung besteht aus einem in der Wand des Schiebers angeordneten Stift, der mit einem konisch ausgebildete und dem Deckelteil zugekehrten Endabschnitt aus der Wandfläche des Schiebers herausragt, und umfasst eine Ausnehmung in der Wand der Deckelplatte, die der Form des konisch ausgebildeten Endabschnittes des Stiftes entspricht, wobei die Ausnehmung in der Wand der Deckelplatte in einem vorgegebenen Abstand zu der dem Schlitten zugekehrten Seitenwand des Gehäuses derart angeordnet ist, dass der Abstand der Ausnehmung zur Seitenwand des Gehäuses in etwa der Länge des ausgefahrenen Abschnittes des Messstiftes entspricht.

Da im ausgefahrenen Zustand jeder Messstift mit einem Abschnitt aus der Seitenwand des Gehäuses herausragt und im eingezogenen Zustand im Innenraum des Gehäuses zu liegen kommt, sind im eingezogenen Zustand die Messstifte des Gerätes gegen äußere Einwirkung wie Schlag, Verbiegen und Verformung durch unsachgemäße Behandlung geschützt .

Mit dem erfindungsgemäß ausgebildeten Gerät wird eine Prüflehre für insbesondere Oberflächenrisse von Werkstücken zur visuellen Prüfung der Risse zur Verfügung gestellt, mit dem der Prüfer von Bauteilen und Werkstücken eine Vielzahl von Messstiften mit den verschiedensten Durchmessern zur Hand gegeben wird, wobei die Messstifte mit dem jeweils erforderlichen Durchmesser griffbereit zur Verfügung stehen, ohne dass aus einer Anzahl von lose zur Verfügung gestellten Messstiften, die jeweils erforderlichen Messstifte herausgesucht werden müssen. Hinzu kommt eine hohe Langlebigkeit der Messstifte, da diese bei Nichtgebrauch sicher und geschützt gegen äußere Einflüsse in dem Gerätegehäuse untergebracht sind. Die Durchmesser der einzelnen Messstifte sind auf der Deckelplatte des Gehäuses angebracht, so dass jeder Messstift dem ihm entsprechenden Durchmesser zugeordnet ist.

In der Zeichnung ist ein Ausführungsbeispiel der Erfindung dargestellt und zwar zeigt:
- Fig. 1: eine Ausführungsform des Gerätes mit einem einen kreisförmigen Querschnitt aufweisenden Gehäuse mit acht Messstiften in einer Ansicht von oben,
- Fig. 1A: eine weitere Ausführungsform des Gerätes mit auf der Deckelplatte des Gerätegehäuses radial verschiebbaren Schiebern für das Ein- und Ausfahren der Messstifte,
- Fig. 2: teils in Ansicht, teils in einem senkrechten Schnitt einen Abschnitt des Gehäuses des Gerätes mit dem einen Messstift haltenden, und mit dem außenliegenden Schieber verbundenen Schlitten sowie einer Arretierungseinrichtung für das Arretieren des Schiebers im ausgefahrenen Zustand des Messstiftes und
- Fig. 3: eine vergrößerte Wiedergabe des Abschnittes des Gehäuses des Gerätes gemäß Fig. 2.

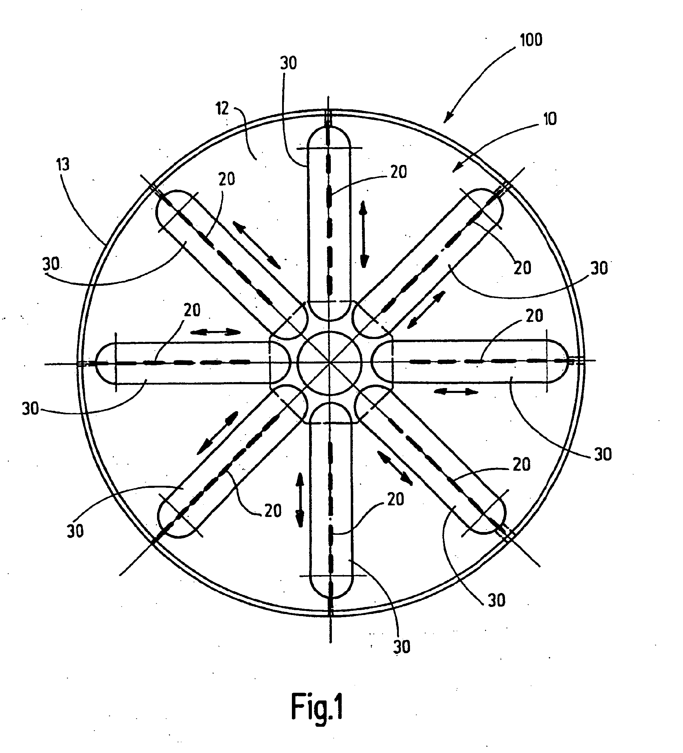

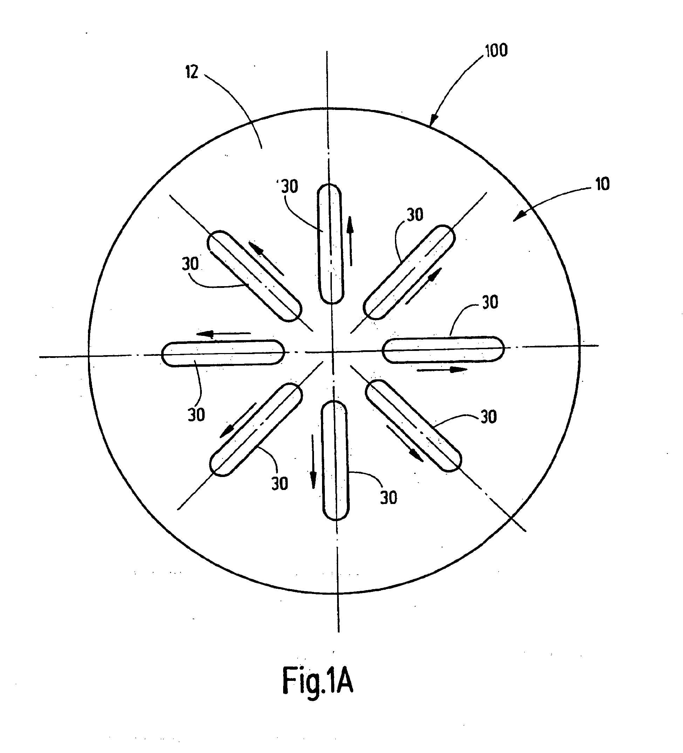

Das Gerät 100 zur visuellen Prüfung von Rissen, insbesondere von Rissen in der Oberfläche von Bauteilen und Werkstücken aus metallischen Materialien oder aus Kunststoffen besteht gemäß Fig. 1 bis 3 aus einem flachen, bevorzugterweise scheibenförmigen Gehäuse 10 mit einem quadratischen, rechteckförmigen, kreisförmigen oder einem mehreckigen Querschnitt. Das Gehäuse wird gebildet von einer Bodenplatte 11, einer Deckelplatte 12 und einer umlaufenden, die Bodenplatte mit der Deckelplatte verbindenden Seitenwand 13.

In dem Innenraum 14 des Gehäuses 10 sind ein oder mehrere verschiedene Durchmesser aufweisende drahtförmige bzw. minenartige Messstifte 20 angeordnet, die einzeln vermittels außerhalb des Gehäuses 10 angeordneter Schieber 30 in Messstiftlängsrichtung derart verschieblich sind, dass im ausgefahrenen Zustand jeder einzelne Messstift 20 mit einem Abschnitt 20a aus der Seitenwand 13 des Gehäuses 10 herausragt. Die Betätigung des Schiebers 30 erfolgt von Hand, wobei der Schieber 30 auch elektromotorisch betrieben sein kann. Das Gehäuse 10 weist dann einen Antriebsmotor und eine entsprechende Stromquelle auf. Um eine einwandfreie Handhabung des Schiebers 30 zu gewährleisten, ist dieser bevorzugterweise mit einer Griffprofilierung versehen bzw. derart ausgebildet, dass er sicher verschoben werden kann (Fig. 1 und 1A). Das Verschieben der Messstifte 20 erfolgt in radialer Richtung vermittels der Schieber 30, wobei jedem Messstift 20 ein Schieber 30 zugeordnet ist, der mit dem Messstift funktionell verbunden ist.

Die Anzahl der in dem Gehäuse 10 angeordneten Messstifte 20 kann beliebig sein. Weist das Gehäuse 10 einen quadratischen oder rechteckförmigen Querschnitt auf, dann sind mehrere Messstifte nebeneinander liegend angeordnet. Bei einer Ausgestaltung des Gehäuses 10 mit einem kreisförmigen Querschnitt sind die Messstifte 20 radial zum Mittelpunkt des Gehäuses angeordnet (Fig. 1).

Die drahtförmig ausgebildeten Messstifte 20 weisen die verschiedensten Durchmesser auf. So weist jeder Messstift einen Durchmesser von 0,2 mm, 0,3 mm, 0,35 mm, 0,4 mm, 0,5 mm, 0,6 mm, 0,7 mm, 0,85 mm, 0,9 mm, 1,0 mm oder 1,6 mm auf.

Bei der in Fig. 1 gezeigten Ausführungsform sind in dem Innenraum 14 des einen kreisförmigen Querschnitt aufweisenden Gehäuses 10 acht radial angeordnete Messstifte 20 mit den Durchmessern von 0,2 mm, 0,3 mm, 0,35, 0,4 mm, 0,6 mm, 0,85 mm, 1,0 mm und 1,6 mm verschieblich angeordnet. Jeder Messstift 20 des Gerätes 100 ist vermittels des Schiebers 30 soweit aus dem Gehäuse 10 herausschiebbar, dass sein aus der Seitenwand 13 des Gehäuses 10 herausragende Abschnitt 20a bevorzugterweise eine Länge von mindestens 10 mm aufweist.

Jeder Messstift 20 besteht aus einem Metall oder einem anderen geeigneten Werkstoff.

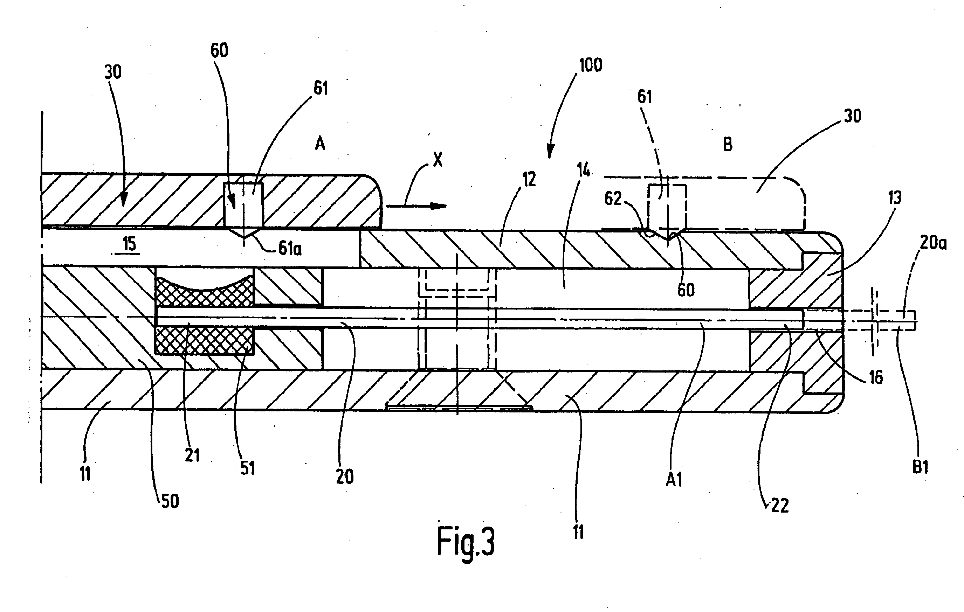

Je nach Anzahl der erforderlichen Messstifte 20 ist in dem Innenraum 14 des Gehäuses 10 jedem Messstift eine Vorrichtung 40 zugeordnet, die eine als verschiebbaren Schlitten 50 ausgebildete Halterung für den Messstift 20 aufweist. Jeder in dem Gehäuse 10 angeordnete Messstift 20 weist einen vorgegebenen Durchmesser auf. Der Schlitten 50 mit dem Messstift 20 ist mit dem als Handhabe ausgebildeten und auf der Außenwandfläche 12a der Deckelplatte 12 des Gehäuses 10 in Längsrichtung des Messstiftes 20 verschieblichen plattenförmigen Schiebers 30 verbunden. Der Schieber 30 wirkt mit einer Arretierungseinrichtung 60 auf der Außenwandfläche 12a der Deckelplatte 12 des Gehäuses 10 derart zusammen, dass bei einem Verschieben des Schiebers 30 in Pfeilrichtung X der gleichzeitig vom Schlitten 50 mitgenommene Messstift 20 mit einem Abschnitt 20a aus der Seitenwand 13 des Gehäuses 10 soweit aus dem Gehäuse 10 herausgeschoben wird, dass der Messstift 20 mit dem Abschnitt 20a aus der Seitenwand 13 des Gehäuses 10 herausragt (Fig. 3). Die Länge des aus der Seitenwand 13 des Gehäuses 10 herausragenden Abschnittes 20a des Messstiftes 20 ist vorgegeben und zwar beispielsweise durch das funktionelle Zusammenwirken der Arretierungseinrichtung 60 zwischen dem Schieber 30 und der Deckelplatte 12 des Gehäuses 10.

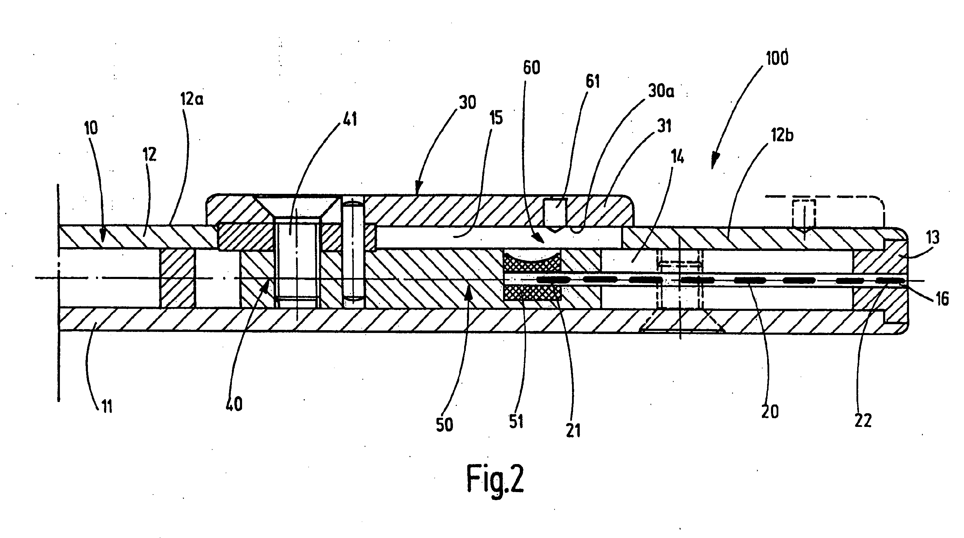

Jeder Messstift 20 ist mit seinem dem Schlitten 50 zugekehrten Ende 21 mit dem Schlitten fest verbunden. Der Schlitten 50 ist, wie Fig. 2 zeigt, im Innenraum 14 des Gehäuses 10 verschieblich gehalten und gelagert. Der Schlitten selbst kann aus Kunststoff, einem metallischem Werkstoff oder aus einem anderen geeigneten Material bestehen.

Um den Schlitten 50 vermittels des Schiebers 30 verschieben zu können, weist die Deckelplatte 12 des Gehäuses 10 ein in Bewegungsrichtung des Schiebers verlaufendes Langloch 15 auf, das zur Aufnahme des den Schlitten 50 mit dem Schieber 30 verbindenden Zapfens 41 dient. Das Verbindungselement für den Schlitten 50 und den Schieber 30 ist somit durch das Langloch geführt und somit ist das Verschieben des Schlittens 50 vermittels des Schiebers 30 gewährleistet. Die Verbindung zwischen dem Schlitten und dem Schieber kann auch aus einer Schraubverbindung bestehen. Um den Messstift 20 aus den Innenraum 14 des Gehäuses 10 herausfahren zu können, ist in der dem Schlitten 50 gegenüberliegenden Seitenwand 13 des Gehäuses 10 eine Durchbohrung 16 vorgesehen, in der das freie Ende 22 des mit seinem anderem Ende 21 mit dem Schlitten 50 verbundene Messstift 20 gehalten und geführt ist, wenn der Messstift 20 ausgefahren wird (Fig. 2 und 3). Die Anzahl der Durchbohrungen 16 in der Seitenwand 13 des Gehäuses 10 entspricht der Anzahl der in dem Gehäuse angeordneten Messstifte 20. Die bei dem Gerät 100 vorgesehene Arretierungseinrichtung 60 besteht aus einem in der Wand 31 des Schiebers 30 angeordneten Stift 61, Dieser Stift 61 ragt mit einem konisch ausgebildeten und der Deckelplatte 12 zugekehrten Endabschnitt 61a aus der Wandfläche 30a des Schiebers 30 heraus, und greift, wenn der Messstift 20 ausgefahren ist, in eine Ausnehmung 62 in der Wand 12b der Deckelplatte 12 ein. Die Ausgangsstellung des Schiebers 30 und somit auch des Schlittens 50 bei eingezogenem Messstift 20 ist in Fig. 3 bei A dargestellt. Wird der Schieber 30 in Pfeilrichtung X verschoben, so gleitet der konisch ausgebildete Endabschnitt 61a des Stiftes 61 auf der Außenwandfläche 12a der Deckelplatte 12 von der Stellung A bis zur Stellung B, in der der Stift 61 in die Ausnehmung 62 einrastet. In dieser Stellung B des Schlittens 50 ist der Messstift 20 von der Stellung A1 in die Stellung B1 bewegt worden und liegt mit seinem Abschnitt 20a außerhalb des Gehäuses 10.

Der Abstand der Ausnehmung 62 zu der Seitenwand 13 des Gehäuses 10 entspricht in etwa der Länge des ausgefahrenen Abschnittes 20a des Messstiftes 20. Neben der vorangehend beschriebenen und in der Zeichnung dargestellten Arretierungseinrichtung können auch andersartig ausgebildete Rasteinrichtungen eingesetzt werden. Beispielsweise besteht die Möglichkeit, die Stifte 61 federnd in der Wand des Schiebers 30 anzuordnen, so dass immer ein sicheres Einrasten des Stiftes 61 in die Ausnehmung 62 gewährleistet ist.

Wie Fig. 1 zeigt, weist das Gerät 100 bevorzugterweise acht in dem Gehäuse 10 radial angeordnete Vorrichtungen 40 mit verschiedene Durchmesser aufweisenden Messstiften auf, die einzeln vermittels der Schieber 30 derart ein- und ausfahrbar sind, dass im ausgefahrenen Zustand jeder Messstift 20 mit einem Abschnitt 20a aus der Seitenwand 13 des Gehäuses 10 herausragt und im eingezogenen Zustand im Innenraum 14 des Gehäuses 10 zu liegen kommt.

Weist das Gehäuse 10 einen quadratischen oder rechteckförmigen Querschnitt auf, dann sind die Vorrichtungen für das Ein- und Ausschieben der Messstifte 20 nebeneinander liegend angeordnet.

Die Deckelplatte 12 des Gehäuses 10 weist im Bereich der einzelnen Messstifte 20 hin auf den jeweiligen Durchmesser der entsprechenden Messstifte 20, so dass mit einem Blick die Größe des Durchmessers des jeweils zu verwendenden Messstiftes erfasst werden kann.

Das Gehäuse 10 des Gerätes 100 weist bei dem in Fig. 1 gezeigten Ausführungsbeispiel bevorzugterweise einen Außendurchmesser von 75 mm auf. Jedoch auch andere Durchmesser können für das Gehäuse 10 gewählt sein. Die Länge eines jeden Schiebers 30 kann beliebig gewählt sein. Sie wird jedoch so bemessen sein, dass eine einwandfreie Betätigung gewährleistet ist.

Das erfindungsgemäß ausgebildete Gerät 100 wird zur visuellen Prüfung von Rissen in den Oberflächen von Bauteilen oder Werkstücken wie folgt verwendet:

Nach Inaugenscheinnahme des zu prüfenden Risses wird aus dem Gerät 100 derjenige Messstift 20 ausgefahren, dessen Durchmesser dem Durchmesser des zu überprüfenden Risses am Nächsten kommt. Durch Verwendung weiterer Messstifte mit anderen Durchmessern kann der Prüfende mit hoher Genauigkeit den Durchmesser des zu überprüfenden Risses feststellen, indem die Durchmesser des Risses und des jeweils eingesetzten Messstiftes miteinander verglichen werden. Die Toleranzgrenze wird dabei vorgegeben, so dass der Prüfer in der Lage ist, Bauteile oder Werkstücke mit die Toleranzgrenze überschreitenden Rissen auszusortieren. Neben Rissen in der Oberfläche von Bauteilen oder Werkstücken können auch Risse in den Wandflächen von Hohlräumen in gleicher Weise erfasst und vermessen werden, was vermittels entsprechend ausgebildeter Einrichtungen erfolgt, die in die Hohlräume von zu überprüfenden Bauteilen eingeführt werden. Dabei kann es sich beispielsweise um optische Einrichtungen handeln, über die vermittels Monitore es ermöglichen, in den Wandflächen von Hohlräumen entstandene Risse zu überprüfen.

### Bezugszeichenliste

- 100: Gerät

- 10: Gehäuse
- 11: Bodenplatte
- 12: Deckelplatte
- 12a: Außenwandfläche
- 12b: Wand
- 13: umlaufende Seitenwand
- 14: Innenraum
- 15: Langloch
- 16: Durchbohrung

- 20: Messstift
- 20a: Abschnitt
- 21: Ende
- 22: Ende

- 30: Schieber
- 30a: Wandfläche
- 31: Wand

- 40: Vorrichtung
- 41: Zapfen/Schraubverbindung

- 50: Schlitten
- 51: Halterung

- 60: Arretierungseinrichtung
- 61: Stift
- 61a: Endabschnitt
- 62: Ausnehmung

## Patentansprüche

1. Gerät zur visuellen Prüfung von Rissen in der Oberfläche von Bauteilen aus metallischen Materialien oder aus Kunststoffen vermittels drahtförmigen Messstiften (20) bekannten Durchmessers, die visuell mit dem Durchmesser der Risse abgleichbar sind,
wobei das Gerät (100) aus einem flachen Gehäuse (10) mit einem quadratischen, rechteckförmigen, kreisförmigen oder einem mehreckigen Querschnitt und mit einer Bodenplatte (11), einer Deckel-platte (12), und einer umlaufenden, die Bodenplatte (11) mit der Deckelplatte (12) verbindenden Seitenwand (13) besteht, wobei in dem Innenraum (14) des Gehäuses (10) verschiedene Durchmesser aufweisende, drahtförmige Messstifte (20) angeordnet sind, die einzeln vermittels eines außerhalb des Gehäuses (10) angeordneten hand- oder motorisch-betriebenen Schiebers (30) in Messstiftlängsrichtung derart verschieblich sind, dass im ausgefahrenen Zustand der Messstift (20) mit einem Abschnitt (20a) aus der Seitenwand (13) des Gehäuses (10) herausragt, wobei zum Verschieben der Messstifte (20) jedem Messstift (20) eine innerhalb des Gehäuses (10) angeordnete Vorrichtung (40) zugeordnet ist, die eine als verschiebbarer Schlitten (50) ausgebildete Halterung (51) für den Messstift (20) aufweist, wobei der Schlitten (50) mit dem außerhalb des Gehäuses (10) angeordneten Schieber (30) verbunden ist und wobei die Messstifte (20) einen Durchmesser von 0,2 mm, 0,3 mm, 0,35 mm, 0,4 mm, 0,5 mm, 0,6 mm, 0,7 mm, 0,85 mm, 0,9 mm, 1,0 mm oder 1,6 mm aufweisen.

2. Gerät nach Anspruch 1,
**dadurch gekennzeichnet,**
**dass** in dem Gehäuse (10) mit einem quadratischen oder rechteckförmigen Querschnitt mehrere Messstifte (20) nebeneinander liegend angeordnet sind.

3. Gerät nach Anspruch 1,
**dadurch gekennzeichnet,**
**dass** in dem Gehäuse (10) mit einem kreisförmigen Querschnitt mehrere Messstifte (20) radial zum Mittelpunkt des Gehäuses (10) angeordnet sind.

4. Gerät nach einem der vorhergehenden Ansprüche 1 bis 3,
**dadurch gekennzeichnet,**
**dass** in dem Innenraum (14) des einen kreisförmigen Querschnitt aufweisenden Gehäuses (10) acht radial angeordnete Messstifte (20) mit den Durchmessern von 0,2 mm, 0,3 mm, 0,35 mm, 0,4 mm, 0,6 mm, 0,85 mm, 1,0 mm und 1,6 mm verschieblich angeordnet sind.

5. Gerät nach einem der vorhergehenden Ansprüche 1 bis 4,
**dadurch gekennzeichnet,**
**dass** jeder Messstift (20) soweit aus dem Gehäuse (10) herausschiebbar ist, dass sein aus der Seitenwand (13) des Gehäuses (10) herausragender Abschnitt (20a) eine Länge von mindestens 10 mm aufweist.

6. Gerät nach einem der vorhergehenden Ansprüche 1 bis 5,
**dadurch gekennzeichnet,**
**dass** jeder drahtförmige Messstift (20) aus einem Metall besteht.

7. Gerät nach einem der vorhergehenden Ansprüche 1 bis 6,
**dadurch gekennzeichnet,**
**dass** der Schlitten (50) mit dem Messstift (20) mit dem als Handhabe ausgebildeten und auf der Außenwandfläche (12a) der Deckelplatte (12) des Gehäuses (10) in Längsrichtung des Messstiftes (20) verschieblichen, plattenförmigen Schieber (30) verbunden ist, der mit einer lösbaren Arretierungseinrichtung (60) auf der Außenwandfläche (12a) der Deckelplatte (12) des Gehäuses (10) derart zusammenwirkt, dass bei einem Verschieben des Schiebers (30) der gleichzeitig vom Schlitten (50) mitgenommene Messstift (20) dieser mit einem Abschnitt (20a) aus der Seitenwand (13) des Gehäuses (10) herausgeschoben wird, dass der Messstift (20) mit einem Abschnitt (20a) aus der Seitenwand (13) des Gehäuses (10) herausragt, wobei die Länge des herausgeschobenen Abschnittes (20a) des Messstiftes (20) durch das funktionelle Zusammenwirken der Arretierungseinrichtung (60) zwischen dem Schieber (30) und der Deckelplatte (12) des Gehäuses (10) vorgegeben ist.

8. Gerät nach Anspruch 7,
**dadurch gekennzeichnet,**
**dass** die Deckelplatte (12) des Gehäuses (10) mit einem in Bewegungsrichtung des Schiebers (30) verlaufenden Langloch (15) zur Aufnahme des den Schlitten (50) der Vorrichtung (40) mit dem Schieber (30) verbindenden Zapfens oder Schraubverbindung (41) versehen ist.

9. Gerät nach einem der Ansprüche 7 oder 8,
**dadurch gekennzeichnet,**
**dass** der Messstift (20) mit seinem dem Schlitten (50) zugekehrten Ende (21) mit dem Schlitten (50) fest verbunden ist.

10. Gerät nach einem der vorhergehenden Ansprüche 7 bis 9,
**dadurch gekennzeichnet,**
**dass** in der dem Schlitten (50) gegenüberliegenden Seitenwand (13) des Gehäuses (10) eine Durchbohrung (16) für das Hindurchführen des Messstiftes (20) vorgesehen ist, wobei die Anzahl der Durchbohrungen (16) der Anzahl der in dem Gehäuse (10) angeordneten Messstifte (20) entspricht.

11. Gerät nach einem der vorhergehenden Ansprüche 7 bis 10,
**dadurch gekennzeichnet,**
**dass** die Arretierungseinrichtung (60) aus einem in der Wand (31) des Schiebers (30) angeordneten Stift (61) besteht, der mit einem konisch ausgebildeten und der Deckelplatte (12) zugekehrten Endabschnitt (61a) aus der Wandfläche (30a) des Schiebers (30) herausragt, und eine Ausnehmung (62) in der Wand (12b) der Deckelplatte (12) umfasst, die der Form des konisch ausgebildeten Endabschnittes (61a) des Stiftes (61) entspricht, wobei die Ausnehmung (62) in der Wand (12b) der Deckelplatte (12) in einem vorgegebenen Abstand zu der dem Schlitten (50) zugekehrten Seitenwand (13) des Gehäuses (10) derart angeordnet ist, dass der Abstand der Ausnehmung (62) zur Seitenwand (13) des Gehäuses (10) in etwa der Länge des ausgefahrenen Abschnittes (20a) des Messstiftes (20) entspricht.

12. Gerät nach einem der vorhergehenden Ansprüche 1 bis 11,
**dadurch gekennzeichnet,**
**dass** das Gehäuse (10) des Gerätes (100) scheibenförmig mit einem kreisförmigen Querschnitt ausgebildet ist und aus Kunststoff oder einem metallischen Werkstoff besteht.

## Claims

1. A device for visual examination of fissures in the surface of components made of metallic materials or plastics, by means of wire-shaped measuring pins (20) of known diameter which are visually comparable with the diameter of the fissures,
wherein the device (100) has a flat housing (10) comprising a quadratic, rectangular, circular or polygonal cross section and a base plate (11), a covering plate (12) and a circumferential side wall (13) connecting the base plate (11) to the covering plate (12), wherein wire-shaped measuring pins (20) having different diameters are arranged in the interior space (14) of the housing (10), said measuring pins (20) being individually movable in a longitudinal direction of the measuring pins by means of a hand- or motor-operated slider (30) arranged outside the housing (10), such that when the measuring pin (20) is in an extended condition a portion (20a) of it projects from the side wall (13) of the housing (10), wherein in order to move the measuring pins (20), each measuring pin (20) is assigned a device (40) arranged within the housing (10), which device has a mount (51) for the measuring pin (20) formed as a movable sliding carriage (50), wherein the sliding carriage (50) is connected to the slider (30) arranged outside the housing (10) and wherein the measuring pins (20) have a diameter of 0.2 mm, 0.3 mm, 0.35 mm, 0.4 mm, 0.5 mm, 0.6 mm, 0.7 mm, 0.85 mm, 0.9 mm, 1.0 mm or 1.6 mm.

2. The device according to claim 1,
**characterized in that**
a plurality of measuring pins (20) is arranged lying alongside one another in the housing (10), said housing (10) having a quadratic or rectangular cross section.

3. The device according to claim 1,
**characterized in that**
a plurality of measuring pins (20) is arranged radially to the centre of the housing (10) in the housing (10), said housing (10) having a circular cross section.

4. The device according to one of the preceding claims 1 to 3,
**characterized in that**
in the interior space (14) of the housing (10) eight radially arranged measuring pins (20) with diameters of 0.2 mm, 0.3 mm, 0.35 mm, 0.4 mm, 0.6 mm, 0.85 mm, 1.0 mm and 1.6 mm are movably arranged, said housing (10) having a circular cross section.

5. The device according to one of the preceding claims 1 to 4,
**characterized in that**
each measuring pin (20) can be pushed out of the housing (10) far enough for its portion (20a) projecting from the side wall (13) of the housing (10) to have a length of at least 10 mm.

6. The device according to one of the preceding claims 1 to 5,
**characterized in that**
each wire-shaped measuring pin (20) is made of a metal.

7. The device according to one of the preceding claims 1 to 6,
**characterized in that**
the sliding carriage (50) with the measuring pin (20) is connected to the plate-shaped slider (30) configured as a handle and movable on the outer wall surface (12a) of the covering plate (12) of the housing (10) in the longitudinal direction of the measuring pin (20), which slider interacts with a detachable locking device (60) on the outer wall face (12a) of the covering plate (12) of the housing (10), such that when the slider (30) moves, the measuring pin (20) simultaneously carried along by the sliding carriage (50) is pushed out of the side wall (13) of the housing (10) by a portion (20a), such that the measuring pin (20) projects out of the side wall (13) of the housing (10) by a portion (20a), wherein the length of the pushed-out portion (20a) of the measuring pin (20) is predetermined by the functional interaction of the locking device (60) between the slider (30) and the covering plate (12) of the housing (10).

8. The device according to claim 7,
**characterized in that**
the covering plate (12) of the housing (10) is provided with an elongated hole (15) running in the movement direction of the slider (30) to receive the pin connecting the sliding carriage (50) of the device (40) to the slider (30) or the screw connection (41).

9. The device according to one of the claims 7 or 8,
**characterized in that**
the measuring pin (20) is rigidly connected with its end (21) facing away from the carriage (50) to the sliding carriage (50).

10. The device according to one of the preceding claims 7 to 9,
**characterized in that**
in the side wall (13) of the housing (10) opposite the sliding carriage (50) is provided a through-hole (16) for guiding through the measuring pin (20), wherein the number of through-holes (16) corresponds to the number of measuring pins (20) arranged in the housing (10).

11. The device according to one of the preceding claims 7 to 10,
**characterized in that**
the locking device (60) comprises a pin (61) arranged in the wall (31) of the slider (30), which pin projects with a conically formed end portion (61a) facing away from the covering plate (12) from the wall face (30a) of the slider (30) and comprises a recess (62) in the wall (12b) of the covering plate (12), which covering plate (12) corresponds to the shape of the conically configured end portion (61a) of the pin (61), wherein the recess (62) in the wall (12b) of the covering plate (12) is arranged at a predetermined distance from the side wall (13) of the housing (10) facing away from the sliding carriage (50), such that the distance between the recess (62) and the side wall (13) of the housing (10) roughly corresponds to the length of the extended portion (20a) of the measuring pin (20).

12. The device according to one of the preceding claims 1 to 11,
**characterized in that**
the housing (10) of the device (100) is configured in a plate shape with a circular cross section and is made of plastic or a metallic material.

## Revendications

1. Appareil de vérification visuelle de fissures dans la surface de composants en matériaux métalliques ou en matières plastiques au moyen de tiges de mesure (20) en forme de fil de diamètre connu qui peuvent être ajustées visuellement au diamètre des fissures,
pour lequel l'appareil (100) est composé d'un boîtier plat (10) avec une section quadratique, rectangulaire, circulaire ou polygonale et avec une plaque de fond (11), une plaque de couverture (12) et une paroi latérale (13) circulaire reliant la plaque de fond (11) à la plaque de couverture (12), pour lequel des tiges de mesure (20) en forme de fil comportant des diamètres différentes sont disposées à l'intérieur (14) du boîtier (10), qui sont individuellement déplaçables au moyen d'un coulisseau (30) actionné à la main ou motorisé disposé en dehors du boîtier (10) dans la direction longitudinale de la tige de mesure de telle sorte que la tige de mesure (20) dépasse à l'état sorti d'une section (20a) de la paroi latérale (13) du boîtier (10), pour lequel est attribué à chaque tige de mesure (20) pour déplacer les tiges de mesure (20) un dispositif (40) monté à l'intérieur du boîtier (10), qui comporte une fixation (51) pour la tige de mesure (20) constituée comme une coulisse (50) déplaçable, pour lequel la coulisse (50) est raccordée au coulisseau (30) disposé en dehors du boîtier (10) et pour lequel les tiges de mesure (20) comportent un diamètre de 0,2 mm, 0,3 mm, 0,35 mm, 0,4 mm, 0,5 mm, 0,6 mm, 0,7 mm, 0,85 mm, 0,9 mm, 1,0 mm ou 1,6 mm.

2. Appareil selon la revendication 1,
**caractérisé en ce que**
plusieurs tiges de mesure (20) sont disposées les unes à côté des autres dans le boîtier (10) avec une section quadratique ou rectangulaire.

3. Appareil selon la revendication 1,
**caractérisé en ce que**
plusieurs tiges de mesure (20) sont disposées de façon radiale par rapport au centre du boîtier (10) dans le boîtier (10) avec une section circulaire.

4. Appareil selon une quelconque des revendications précédentes 1 à 3,
**caractérisé en ce que**
huit tiges de mesure (20) de diamètres 0,2 mm, 0,3 mm, 0,35 mm, 0,4 mm, 0,6 mm, 0,85 mm,1,0 mm ou 1,6 mm, disposées de manière radiale, sont montées à l'intérieur (14) du boîtier (10) présentant une section circulaire.

5. Appareil selon une quelconque des revendications précédentes 1 à 4,
**caractérisé en ce que**
chaque tige de mesure (20) peut être glissée à l'extérieur du boîtier (10) jusqu'à ce que sa section (20a) sortie de la paroi latérale (13) du boîtier (10) comporte une longueur d'au moins 10 mm.

6. Appareil selon une quelconque des revendications précédentes 1 à 5,
**caractérisé en ce que**
chaque tige de mesure (20) en forme de fil est faite d'un métal.

7. Appareil selon une quelconque des revendications précédentes 1 à 6,
**caractérisé en ce que**
la coulisse (50) avec la tige de mesure (20) est raccordée avec le coulisseau (30) constitué comme une manette et en forme de plaque, déplaçable sur la surface latérale extérieure (12a) de la plaque de couverture (12) du boîtier (10) dans le sens longitudinal de la tige de mesure (20), qui coopère avec un système de blocage (60) amovible sur la surface de paroi extérieure (12a) de la plaque de couverture (12) du boîtier (10) de telle sorte que lors d'un déplacement du coulisseau (30) de la tige de mesure (20) simultanément entraînée par la coulisse (50), celle-ci est poussée à l'extérieur de la paroi latérale (13) du boîtier (10) d'une section (20a), **en ce que** la tige de mesure (20) ressort d'une section (20a) de la paroi latérale (13) du boîtier (10), la longueur de la section (20a) poussée à l'extérieur de la tige de mesure (20) étant préalablement fixée par l'interaction fonctionnelle du système de blocage (60) entre le coulisseau (30) et la plaque de couverture (12) du boîtier (10).

8. Appareil selon la revendication 7,
**caractérisé en ce que**
la plaque de couverture (12) du boîtier (10) est munie d'un trou oblong (15) passant dans le sens de déplacement du coulisseau (30) destiné à recevoir le pivot ou raccord à vis (41) raccordant la coulisse (50) du dispositif (40) au coulisseau (30).

9. Appareil selon une quelconque des revendications précédentes 7 ou 8,
**caractérisé en ce que**
la tige de mesure (20) est fermement raccordée à la coulisse (50) à son extrémité (21) adjacente à la coulisse (50).

10. Appareil selon une quelconque des revendications précédentes 7 à 9,
**caractérisé en ce que**
dans la paroi latérale (13) du boîtier (10) opposée à la coulisse (50) est prévu un perçage (16) pour le passage de la tige de mesure (20), le nombre de perçages (16) correspondant au nombre des tiges de mesure (20) disposées dans le boîtier (10).

11. Appareil selon une quelconque des revendications précédentes 7 à 10,
**caractérisé en ce que**
le système de blocage (60) est composé d'une tige (61) disposée dans la paroi (31) du coulisseau (30) qui dépasse d'une section finale (61a) constituée de façon conique et adjacente à la plaque de couverture (12) de la surface de paroi (30a) du coulisseau (30) et comprend un évidement (62) dans la paroi (12b) de la plaque de couverture (12) qui correspond à la forme de la section finale (61a) constituée de façon conique de la tige (61), l'évidement (62) dans la paroi (12b) de la plaque de couverture (12) étant disposé à une distance prédéfinie par rapport à la paroi latérale (13) du boîtier (10) adjacente à la coulisse (50) de telle sorte que la distance de l'évidement (62) à la paroi latérale (13) du boîtier (10) correspond à peu près à la longueur de la section sortie (20a) de la tige de mesure (20).

12. Appareil selon une quelconque des revendications précédentes 1 à 11,
**caractérisé en ce que**
le boîtier (10) de l'appareil (100) est constitué en forme de disque avec une section circulaire et est en matière plastique ou en un matériau métallique.
